Europäisches Patentamt

European Patent Office

Office européen des brevets

(19)

(11)  EP 0 618 266 B1

(12)  **EUROPÄISCHE PATENTSCHRIFT**

(45) Veröffentlichungstag und Bekanntmachung des Hinweises auf die Patenterteilung:
**31.10.2001  Patentblatt 2001/44**

(51) Int Cl.⁷: **C08L 67/02**, C08L 75/04, C08L 51/04, H01B 3/42

(21) Anmeldenummer: **94104076.8**

(22) Anmeldetag: **16.03.1994**

(54) **Thermoplastische Formmassen aus Polyalkylenterephthalat,thermoplastischem Polyurethan und kautschukelastischem Polymerisat**

Thermoplastic moulding compositions from polyalkylene terephthalate, thermoplastic polymethane and rubber elastic polymer

Masses à mouler thermoplastiques à base de polytéréphtalates d'alkylène, de polyméthane thermoplastique et de polymère caoutchouteux élastique

(84) Benannte Vertragsstaaten:
**DE FR GB IT**

(30) Priorität: **29.03.1993  DE 4309981**
**29.04.1993  DE 4314039**
**29.04.1993  DE 4314040**
**29.04.1993  DE 4314041**
**06.12.1993  DE 4341459**

(43) Veröffentlichungstag der Anmeldung:
**05.10.1994  Patentblatt 1994/40**

(73) Patentinhaber: **BAYER AG**
**51368 Leverkusen (DE)**

(72) Erfinder:
• **Magerstedt, Herbert, Dipl.-Ing.**
**D-47445 Moers (DE)**
• **Zander, Klaus, Dr.**
**D-45478 Mülheim (DE)**
• **Friedemann, Paul, Dipl.-Ing.**
**D-51469 Bergisch Gladbach (DE)**
• **Leimann, Gerhard, Dipl.-Ing.**
**D-42657 Solingen (DE)**

(56) Entgegenhaltungen:
**EP-A- 0 418 686          EP-A- 0 420 016**
**BE-A- 850 419            US-A- 4 107 131**

EP 0 618 266 B1

**Beschreibung**

Die Erfindung betrifft thermoplastische Formmassen auf der Basis von Polyalkylenterephthalat, thermoplastischem Polyurethan und kautschukelastischem Polymerisat sowie aus diesen thermoplastischen Formmassen herstellbare und verwendbare schlagzähe und temperaturbeständige Einstellungen für die Kabelummantelung bzw. für Formkörper, die ein entsprechendes Anforderungsprofil aufweisen.

Wie beispielsweise aus der Literatur bekannt ist, lassen sich Kunststoffe, wie Polyvinylchlorid, Polyamid, Polycarbonat, Polyalkylenterephthalat etc. mischen.

Ebenso ist bekannt, daß sich Kunststoffe, wie z.B. Poly(ester)carbonate, thermoplastische Polyurethane und Pfropfpolymere durch Compoundierung zu Blends verarbeiten lassen (DE-OS 3 812 051).

Ferner sind Mischungen aus Polycarbonat und 0,25 bis 50 % eines Polyurethans sowie 0,01 bis 2,0 % eines Propfpolymeren (Alkylencyanid und Vinylaromaten auf Polybutadien) gemäß DE-OS 2 304 214 bzw. US-Patent 3 813 358 bekannt. Die Abmischungen haben verbesserte Oberflächeneigenschaften.

US-PS 4 169 479 beschreibt thermoplastische Polyurethanelastomermischungen aus 40 bis 100 % eines thermoplastischen Polyurethans, 0 bis 60 % eines thermoplastischen Polymeren (Polycarbonat) und 0,5 bis 10 % eines Acrylpolymeren. Die Produkte zeichnen sich durch eine gute Homogenität der Mischung und die Formteile durch einen verbesserten Glanz aus. Als Acrylpolymere sind keine Pfropfpolymeren subsummiert.

Aus dem US-Patent 4 350 799 bzw. dem EP-A 0 074 594 sind Mischungen von thermoplastischen Polyurethanen, thermoplastischen Polyphosphonaten und thermoplastischen Polycarbonaten bekannt, welche eine verbesserte Flammwidrigkeit besitzen.

Aus der EP-OS 0 104 695 sind Mischungen aus einem oder mehreren Pfropfpolymerisaten, einem oder mehreren Copolymerisaten, einem oder mehreren Polycarbonaten und einem oder mehreren Polyurethanen, bekannt. Derartigen Mischungen werden eine gute Benzinbeständigkeit, gute Verarbeitungseigenschaften und ein gutes Fließverhalten zugeschrieben. Als Polyurethane kommen elastische Polyurethane in Betracht. Als Kautschukgrundlage für die Herstellung der Pfropfpolymerisate sind Polybutadien, Butadien-Styrol, Butadien-Acrylnitril oder Butadien-Acrylat-Kautschuke besonders erwähnt. Die Propfmonomeren sind Mischungen von 20 bis 40 Gew.-% Acrylverbindungen mit 80 bis 60 Gew.-% Vinylaromaten und gegebenenfalls 0 bis 20 Gew.-% andere ungesättigte Verbindungen geeignet. Als Acrylverbindungen sind u.a. Alkylacrylate und Alkylmethacrylate oder deren Mischungen geeignet.

Aus der EP-A 0 125 739 sind Abmischungen von 50 bis 95 Gew.-Teilen an Polycarbonaten oder Polyestern, 2,5 bis 15 Gew.-Teilen an thermoplastischen Polyurethanen und 2,5 bis 35 Gew.-Teilen von Ethylen-Propylen-Dienkautschuken, die mit ethylenisch ungesättigten Verbindungen behandelt worden sind, welche Carboxyl-Gruppen enthalten oder bilden können.

Die DE-OS 3 521 407 beschreibt thermoplastische Formmassen mit verbesserten Fließnahtfestigkeit. Die Formmassen enthalten thermoplastische Polycarbonate, zwei verschiedenen Pfropfpolymerisate und ein Copolymerisat und gegebenenfalls Additive wie Stabilisatoren, Pigmente, Fließmittel, Entformungsmittel, Flammschutzmittel und/oder Antistatika. Als Pfropfmonomere sind Methylmethacrylat erwähnt, als zu pfropfende Kautschuke eignet sich beispielsweise Polybutadien. Als Fließhilfsmittel wird ein thermoplastisches Polyurethan eingesetzt, und zwar in Mengen von 2 Gew.-Teilen pro 100 Gew.-Teilen der Formmasse aus Polycarbonat, Pfropfpolymerisaten und Copolymerisat.

Aus der DE-OS 3 521 408 sind Formmassen aus Polycarbonaten (A) Propfpolymerisaten (B) und gegebenenfalls Copolymerisation (C) bekannt, die 0,5 bis 10 Gew.-Teile, bezogen auf 100 Gew.-Teile der Formmasse aus (A) + (B) und gegebenenfalls (C), eines speziellen Polyurethans enthalten; die resultierenden Produkte zeigen eine verbesserte Fließfähigkeit bei guter Thermostabilität.

Die Aufgabe der vorliegenden Erfindung ist, eine thermoplastische Formmasse auf Basis Polyalkylenterephthalat mit handelsüblichen und damit wirtschaftlichen Additiven in einer zähelastischen Form bereitzustellen, um beispielsweise Kabelummantelungen bzw. aus dieser thermoplastischen Formmasse herstellbare thermoplastische Formkörper für entsprechende Anforderungsprofile herstellen zu können.

Gegenstand der vorliegenden Erfindung sind thermoplastische Formmassen aus

A:      10 bis 60 Gew.-Teilen Polyalkylenterephthalat,

B:      2 bis 45 Gew.-Teilen, vorzugsweise 5 bis 40, insbesondere 8 bis 30 Gew.-Teilen thermoplastischem Polyurethan und

C:      2 bis 45 Gew.-Teilen, vorzugsweise 5 bis 40, insbesondere 8 bis 30 Gew.-Teilen kautschukelastischem Polymerisat mit einer Glasübergangstemperatur (Tg) von unter 0°C, erhältlich aus

C.1)    10 bis 95 Gew.-Teilen Monomeren aus der Gruppe

C.1.1)   50 bis 99 Gew.-Teilen Styrol und

C.1.2)   1 bis 50 Gew.-Teilen Acrylnitril auf

C.2)    Polybutadien,

wobei die Summe aus A+B+C 100 ergibt.

Die erfindungsgemäßen Mischungen zeichnen sich durch gute Fließfähigkeit, Zähigkeit, Elastizität und Temperaturbeständigkeit sowie Chemikalienbeständigkeit aus. Die erfindungsgemäßen Formmassen zeichnen sich weiter durch eine nicht zu erwartende gute Verträglichkeit der Mischungspartner Polyalkylenterephthalat mit thermoplastischem Polyurethan und kautschukelastischem Polymerisat aus.

Die thermoplastischen Formmassen haben als Extrusionsmaterial eine besondere Bedeutung z.B. als Isoliermaterial für die Kabelindustrie.

Weiterhin lassen sich aus den Formmassen im Spritzgießverfahren hergestellte Formkörper, insbesondere für Bauteile aus dem Elektrosektor einsetzen, z.B. als Stoßkante für Staubsaugergehäuse.

Komponente A:

Polyalkylenenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80, vorzugsweise 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexandimethanol-1,4, 3-Methylpentandiol-2,4- 2-Methylpentandiol-2,4, 2,2,4-Trimethylpentandiol-1,3 und -1,6,2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 2 407 674, 2 407 776, 2 715 932).

Die Polyalkylenterephthalate können durch Einbau relativ kleiner Mengen 3-oder 4-wertiger Alkohole oder 3-oder 4-basischer Carbonsäure, wie sie z.B. in der DE-OS 1 900 270 und der US-PS 3 692 744 beschrieben sind, verzweigt werden. Beispiele für bevorzugte Verzweigungsmittel sind Trimesinsäure, Trirnellitsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt worden sind, besonders bevorzugte Copolyester sind Poly-(ethylenglykol/butandiol-1,4)-terephthalate.

Die als Komponente A, vorzugsweis verwendeten Polyalkylenterephtalate besitzen im allgemeinen eine Schmelzviskosität von ca. 300 bis 1.000 Pas, vorzugsweise 350 bis 900 Pas, gemessen nach Göttfert.

Ein Teil der Polyalkylenterephthalat-Komponente kann durch aromatisches Polycarbonat ersetzt werden. Auch die erfindungsgemäße Zugabe von wiederaufge-arbeiteten Bestandteilen der thermoplastischen Formmassen ist möglich, ohne daß die genannten Eigenschaften sich nachteilig verändern.

Komponente B:

Thermoplastische Polyurethane gemäß Komponente B vorliegender Erfindung sind Reaktionsprodukte aus Diisocyanaten, ganz oder überwiegend aliphatischen Oligo- und/oder Polyestern und/oder -ethern, sowie einem oder mehreren Kettenverlängerern. Diese thermoplastischen Polyurethane sind im wesentlichen linear und besitzen thermoplastische Verarbeitungscharakteristiken.

Die thermoplastischen Polyurethane sind entweder bekannt oder können nach bekannten Verfahren (siehe beispielsweise US-PS 3 214 411, J.H. Saunders und K.C. Frisch, "Polyurethanes, Chemistry and Technology", Vol. II, Seiten 299 bis 451, Interscience Publishers, New York, 1964 und Mobay Chemical Coporation, "A Processing Handbook for Texin Urethane Elastoplastic Materials", Pittsburh, PA) hergestellt werden.

Ausgangsmaterialien zur Herstellung von Oligoester und Polyester sind beispielsweise Adipinsäure, Bernsteinsäure, Subecinsäure, Sebacinsäure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Dimethyl-propylenglykol in Betracht Darüberhinaus können gemeinsam mit den Glykolen kleine Mengen, bis zu 1 Mol-%, tri- oder höher funktionelle Alkohole, z.B. Trimethylolpropan, Glycerin, Hexantriol usw. eingesetzt werden.

Die resultierenden Hydroxyl-oligo- oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt von ca. 0,01 bis 0,2 %.

Oligoester bzw. Polyester sind auch oligomere oder polymere Lactone, wie beispielsweise Oligo-caprolacton oder Poly-caprolacton, und aliphatische Polycarbonate, wie beispielsweise Poly-butandiol-(1,4)-carbonat oder Polyhexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 liegt.

Oligo- bzw. Polyether zur Herstellung der thermoplastischen Polyurethane gemäß Komponente B sind beispielsweise solche auf Basis von Tetramethylenglykol, Propylenglykol und Ethylenglykol.

Polyacetale sind ebenfalls als Polyether zu verstehen und einsetzbar.

Die Oligoether bzw. Polyether sollen mittlere Molekulargewicht $\overline{M}n$ (Zahlenmittel, ermittelt über die OH-Zahl der Produkte) von 600 bis 2.000, vorzugsweise von 1.000 bis 2.000 haben.

Als organisches Diisocyanat wird zur Herstellung der Polyurethane gemäß Komponente B vorzugsweise 4,4'-Diphenylmethan-diisocyanat verwendet. Es sollte weniger als 5 % 2,4'-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von ca. 0,005 bis 0,2 % liegt. Die Acidität, gerechnet als HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlörid-Ionen-Konzentration zu erhaltenl.

Es können auch andere Diisocyanate zur Herstellung der thermoplastischen Polyurethane gemäß Komponente B verwendet werden, beispielsweise die Diisocyanate des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4'-Diphenylens, des 2,2-Diphenylpropan-4,4'-diisocyanat, das Azobenzol-4,4'-diisocyanat, des Diphenylsulfon-4,4'-diisocyanat, das Dichlorhexanmethylendiisocyanat, das Pentamethylen-diisocyanat, das Hexamethylen-diisocyanat, das 1-Chlorbenzol-2,4-diisocyanat, das Furfuryl-diisocyanat, das Dicyclohexylmethandiisocyanat, das Isophorondiisocyanat, das Diphenylmethan-diisocyanat und Bis (-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-β-hydroxyethylether, 1,3-Phenylen-bis-β-hydroxyethylether, Bis-(hydroxymethyl-cyclohexan), Hexandiol, Adipinsäure, ω-Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3'-Dichlorbenzidin, 3,3'-Dinitrobenzidin, Ethanolamin, Aminopropylalkohol, 2,2-Dimethyl-propanolamin, 3-Aminocyclohexylalkohol und p-Aminobenzylalkohol zu nennen. Das Molverhältnis Oligo- bzw. Polyester zu bifunktionellen Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane gemäß Komponente B eingesetzt werden.

Die als Bausteine für die thermoplastischen Polyurethane genannten Diisocyanate, Oligoester, Polyester, Polyether, Kettenverlängerer und monofunktionellen Komponenten sind entweder literaturbekannt oder nach literaturbekannten Verfahren erhältlich.

Die bekannte Herstellung der Polyurethan-Komponente B kann beispielsweise, wie folgt, durchgeführt werden:

So können beispielsweise die Oligo- bzw. Polyester, die organischen Diisocyanate und die Kettenverlängerer für sich vorzugsweise auf eine Temperatur von ca. 50 bis 220°C erhitzt und dann vermischt werden. Vorzugsweise werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verkleinern. Zur Erhöhung der Reaktionsgeschwindigkeit können geeignete Katalysatoren, wie z.B. tertiäre Amine, die in dem US-Patent 2 729 618 genannt werden, zur Anwendung kommen.

Komponente C:

Die kautschukelastischen Polymere C umfassen solche mit 2 bis 45 Gew.-Teilen kautschukelastischen Polymerisat mit einer Glasübergangstemperatur (Tg) von unter 0°C, erhältlich aus C.1.) 10 bis 95 Gew.-Teilen Monomeren, aus der Gruppe C 1.1.) 50 bis 99 Gew.-Teilen Styrol, C.1.2) 1 bis 50 Gew.-Teilen Acrylnitril, C.2.) Polybutadien.

Solche Polymerisate sind z.B. in "Methoden der organischen Chemie" (Houben-Weyl), Bd. 14/1, Georg, Thieme-Verlag, Stuttgart 1961, S. 393 - 406 und in C.B. Bucknall, "Thoughened Plastics", Appl. Science Publishers, London 1977, DE-OS 16 94 173 (= US-PS 3,564,077) beschrieben. Die Polymerisate C besitzen einen Gelgehalt von über 20, vorzugsweise über 40 Gew.-%. Die Glasübergangstemperatur (Tg) liegt unter 0°C, vorzugsweise unter -20°C.

ABS-Polymerisate C sind z.B. in der DE-OS 2 035 390 (=US-PS 3,644,574) oder in der DE-OS 2 248 242 (=GB-PS 1 409 275) beschrieben.

Der Pfropfgrad G bezeichnet das Gew.-Verhältnis von aufgepfropften Pfropfmonomeren zu Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z. und Z. Polymere 250 (1972), 782-796) oder mittels Elektronenmikroskopie und anschließende Teilchenauszählung (C. Kämpf, H. Schuster, Angew. Makromolekulare Chemie 14, (1970), 111-129) oder mittels Lichtstreuungsmessungen.

Die Formmassen können Nukleierungsmittel wie Mikrotalk enthalten. Weiterhin können die Formmassen übliche Zusatzstoffe wie Gleit- und Entformungsmittel, Verarbeitungsstabilisatoren, Füll- und Verstärkungsstoffe sowie Farbstoffe und Pigmente enthalten.

Die Nukleierungsmittel und üblichen Zusatzstoffe außer Füll- und Verstärkungsstoffe können in Mengen von ca. 0,1 bis 3 Gew.-Teilen, bezogen auf 100 Gew.-Teile thermoplastische Formmasse, aus A+B+C zugegeben werden.

Füll- und Verstärkungsstoffe können in Mengen von 1 bis 10 Gew.-Teilen, bezogen auf 100 Gew.-Teile A+B+C zugegeben werden. Die Herstellung der erfindungsgemäßen Formmassen kann in den üblichen Mischaggregaten wie Walzen, Knetern, Ein- oder Mehrwellenextrudern durch Vermischen der Einzelkomponenten erhalten werden.

Beispiel

Die im Beispiel angegebenen Komponenten werden gemischt und in einer Spritzgußmaschine bei üblichen PBT-Verarbeitungsbedingungen (Massetemperatur ca. 260°C) zu Prüfkörpern verarbeitet.

Beispiel

| | |
|---|---|
| 60,0 Gew.-% | Polybutylenterephthalat (PBT), Schmelzviskosität 850 +/- 50 Pa*s (Göttfert) (relative Lösungsviskosität 1,834 bis 1,875, gemessen bei 25°C in einer 0,5 %gen Lösung aus Phenol und 0-Dichlorbenzol, Mischungsverhältnis 1:1 Gew.-Teile), |
| 20,0 Gew.-% | thermoplastisches Polyurethan: Desmopan® 385, Bayer AG (Reaktionsprodukt eines Adipinsäure-Butandiol-Polyesters mit 4,4'-Diphenylmethan-diisocyanat, Butandiol-1,4 als Kettenverlängerer, Verseifungszahl 250) |
| 20,0 Gew.-% | Pfropfpolymerisat von 25 Gew-Teilen Styrol/Acrylnitril im Verhältnis 72:28 auf 75 Gew.-Teile Polybutadien (mittlerer Teilchendurchmesser 0,4 um), hergestellt durch Emulsionspolymerisation |

| Eigenschaften | Dim. | Vorschrift | Beispiel |
|---|---|---|---|
| MVI, 260°C/5 kg | °C | DIN 53735 | 75 |
| Zugversuch: | | | |
| Streckspannung | N/mm$^2$ | DIN 53455 | 21 |
| Streckdehnung | % | DIN 53455 | 17 |
| Reißdehnung | % | DIN 53455 | 190 |
| E-Modul | N/mm$^2$ | DIN 53457-t | 610 |
| Izod-Kerbschlagzähigkeit | kJ/m$^2$ | ISO 180/1A | 57 |
| Shore-Härte D | | DIN 53505 | 68 |

Die erfindungsgemäße Formmasse zeigt ein ausgezeichnetes Dehnungsverhalten, gute Kerbschlagzähigkeit und Shore-Härte.

**Patentansprüche**

1.   Thermoplastische Formmassen aus

   A) 10 bis 60 Gew.-Teilen Polyalkylenterephthalat,

   B) 2 bis 45 Gew.-Teilen thermoplastischen Polyurethan und

   C) 2 bis 45 Gew.-Teilen kautschukelastischem Polymerisat mit einer Glasübergangstemperatur (Tg) von unter 0°C, erhältlich aus

      C.1) 10 bis 95 Gew.-Teilen Monomeren aus der Gruppe

      C.1.1.) 50 bis 99 Gew.-Teilen Styrol und

      C1.2) 1 bis 50 Gew.-Teilen Acrylnitril auf

      C.2) Polybutadien

   wobei die Summe aus A + B + C 100 ergibt.

2.   Formmasse gemäß Anspruch 1, welche zusätzlich übliche Additive wie Gleit- und Entformungsmittel, Verarbeitungsstabilisatoren, Füll- und Verstärkungsstoffe, Farbstoffe und Pigmente enthält.

3.   Verwendung der Formmassen gemäß Anspruch 1 und 2 zur Herstellung von Formkörpern.

4.   Formkörper, hergestellt aus Formmassen gemäß Anspruch 1 und 2.

5.   Isoliermaterial, hergestellt aus Formmassen gemäß Anspruch 1 und 2.

**Claims**

1.   Thermoplastic moulding compositions prepared from

   A) 10 to 60 parts by weight of polyalkylene terephthalate,

   B) 2 to 45 parts by weight of thermoplastic polyurethane and

   C) 2 to 45 parts by weight of rubber-elastic polymer with a glass transition temperature (T$_g$) of below 0°C, obtainable from

C.1) 10 to 95 parts by weight of monomers from the group

C.1.1) 50 to 99 parts by weight of styrene and

C.1.2) 1 to 50 parts by weight of acrylonitrile on

C.2) polybutadiene,

wherein the sum of A+B+C is 100.

2. Moulding composition according to claim 1 which additionally contains conventional additives such as lubricants and mould release agents, processing stabilisers, fillers and reinforcing agents, dyes and pigments.

3. Use of moulding compositions according to claims 1 and 2 for the production of mouldings.

4. Mouldings produced from moulding compositions according to claims 1 and 2.

5. Insulation material produced from moulding compositions according to claims 1 and 2.


**Revendications**

1. Matières à mouler thermoplastiques consistant en

A) 10 à 60 parties en poids d'un téréphtalate de polyalkylène,
B) 2 à 45 parties en poids d'un polyuréthanne thermoplastique et
C) 2 à 45 parties en poids d'un polymère élastique du type caoutchouc ayant une température de transition du second ordre (Tg) inférieure à 0°C, obtenu à partir de

C.1) 10 à 95 parties en poids des monomères du groupe suivant :
C.1.1) 50 à 99 parties en poids de styrène, et
C.1.2) 1 à 50 parties en poids d'acrylonitrile sur
C.2) un polybutadiène,

la somme des quantités de A+B+C étant égale à 100.

2. Matière à mouler selon la revendication 1, contenant en outre des additifs usuels tels que des agents lubrifiants et des agents de démoulage, des stabilisants au façonnage, des matières de charge et matières renforçantes, des colorants et pigments.

3. Utilisation des matières à mouler selon les revendications 1 et 2 pour la fabrication d'objets moulés.

4. Objets moulés fabriqués à partir de matières à mouler selon revendication 1 et 2.

5. Matière isolante préparée à partir de matières à mouler selon les revendications 1 et 2.